# EUROPEAN PATENT APPLICATION

(11) **EP 4 474 934 A1**
(43) Date of publication of application: **11.12.2024**
(21) Application number: 23749635.1
(22) Date of filing: 26.01.2023
(51) Int. Cl.: G05D 1/02, G08G 1/00, G08G 1/09, G01C 21/26, G01C 21/34, G06F 16/909

(54) **AUTONOMOUS MOBILE BODY CONTROL SYSTEM, AND CONTROL METHOD**

(30) Priority: 01.02.2022 JP 2022014166; 12.01.2023 JP 2023003404
(71) Applicant: CANON KABUSHIKI KAISHA, Tokyo 146-8501 (JP)
(72) Inventor: SATO Yohei, Tokyo 146-8501 (JP)
(74) Representative: Canon Europe Limited
(86) International application number: PCT/JP2023/002356
(87) International publication number: WO 2023/149319

(57) **Abstract**

A control system is for issuing a control instruction to at least one autonomous mobile unit. The control system sets a departure point and an arrival point for the autonomous mobile unit, generates route information regarding the autonomous mobile unit from the departure point and the arrival point, converts location information defined by a coordinate system capable of specifying a location in a space into unique identifier information in a format that identifies, using a unique identifier, state-related information and time-related information regarding an object present in the space defined by the coordinate system, and communicates with the autonomous mobile unit. The control system generates route information from any set departure point and any set arrival point, and converts location information regarding each point included in the route information into the unique identifier to express the route information using the unique identifiers.

## Description

### Technical Field

The present invention relates to an autonomous mobile unit control system using a format that defines location and size.

### Background Art

In recent years, with technological innovations such as autonomous driving mobility units and spatial recognition devices in the world, there is an urgent need to develop digital architectures that enable data and systems to be shared and used among members of different organizations and society.

Use of digital architectures enables autonomous mobility units and spatial recognition devices to acquire more information and also cooperate with external devices and systems other than themselves to solve larger problems. To achieve this, a technology is needed to link real-world space to digital information.

Hitherto, there has been technologies that link real-world space to digital information, such as the one described in PTL 1. In PTL 1, a single processor segments a space-time region in terms of time and space in accordance with space-time management data supplied by the user to generate multiple space-time segmented regions. Considering the temporal and spatial proximity of the space-time segmented regions, an identifier that is expressed as a one-dimensional integer value is assigned to uniquely identify each of the multiple space-time segmented regions. A space-time data management system is disclosed that determines the arrangement of time-series data such that data in the space-time segmented regions whose identifiers are close to each other are arranged close to each other on a storage device.

### Citation List

### Patent Literature

PTL 1: Japanese Patent Laid-Open No. 2014-2519

### Summary of Invention

### Technical Problem

However, the technology in PTL 1 described above does not mention any rules for generating space-time segmented regions, and the data regarding the generated regions can be grasped using identifiers only within the processor that generated them. Thus, in order to share and use such data among members of different organizations and societies (hereinafter referred to as "system users"), it is necessary to understand the structure of the data in advance, and the existing system needs to be restructured such that each system user can handle the data structure. This may cause large scale work.

There is also no mention of specific usage for different system users to use the information regarding the space-time segmented regions.

Therefore, the present invention aims to provide a system that can control autonomous mobile units by sharing information regarding space-time segmented regions among multiple devices.

### Solution to Problem

A control system according to the present invention has the following configuration. That is, a control system includes: a setting means for setting a departure point and an arrival point for at least one autonomous mobile unit, a route generation means for generating route information regarding the autonomous mobile unit from the departure point and the arrival point, a unique identifier conversion means for converting location information defined by a coordinate system capable of specifying a location in a space into unique identifier information in a format that identifies, using a unique identifier, state-related information and time-related information regarding an object present in the space defined by the coordinate system, and a communication means for communicating with the autonomous mobile unit. The unique identifier conversion means converts location information regarding each point included in the route information into the unique identifier to express the route information using the unique identifiers. Advantageous Effects of Invention

According to the present invention, an autonomous mobile unit control system using a digital architecture can be provided.

### Brief Description of Drawings

The attached drawings are included in the specification and form a part of the specification. The attached drawings are used to illustrate embodiments of the present invention and to describe the principles of the present invention together with the description of the embodiments.
[Fig. 1] Fig. 1 is a diagram illustrating the entire configuration of an autonomous mobile unit control system.
[Fig. 2A] Fig. 2A illustrates an image illustrating a location information input screen.
[Fig. 2B] Fig. 2B illustrates an image illustrating a selection screen for selecting an autonomous mobile unit.
[Fig. 3A] Fig. 3A illustrates an image illustrating a screen for confirming the current location of the autonomous mobile unit.
[Fig. 3B] Fig. 3B illustrates an image illustrating a map display screen for confirming the current location of the autonomous mobile unit.
[Fig. 4] Fig. 4 is a block diagram illustrating the internal structure of each apparatus in Fig. 1.
[Fig. 5] Fig. 5 is a perspective view illustrating the mechanical configuration of an autonomous mobile unit 12.
[Fig. 6] Fig. 6 is a block diagram illustrating an example of the specific configuration of a controller.
[Fig. 7] Fig. 7 is a sequence diagram for describing processing performed by the autonomous mobile unit control system.
[Fig. 8A] Fig. 8A is a diagram illustrating latitude/longitude information regarding the Earth.
[Fig. 8B] Fig. 8B is a perspective view illustrating a predetermined space 100.
[Fig. 9] Fig. 9 is a diagram schematically illustrating spatial information within the space 100.
[Fig. 10A] Fig. 10A illustrates an image in which route information using route information is displayed as map information.
[Fig. 10B] Fig. 10B illustrates an image in which route information using location point cloud data is displayed as map information.
[Fig. 10C] Fig. 10C illustrates an image in which route information using unique identifiers is displayed as map information.
[Fig. 11A] Fig. 11A is a diagram for creating a costmap.
[Fig. 11B] Fig. 11B is a diagram for creating a costmap.

### Description of Embodiments

In the following, embodiments of the present invention will be described with reference to the drawings. However, the present invention is not limited to the following embodiments. In each drawing, the same members or elements are denoted by the same reference numbers, and redundant description will be omitted or simplified.

Although the embodiments describe examples in which the present invention is applied to the control of an autonomous mobile unit, the present invention may also be applied to mobile units that are at least partially operable by the user with respect to the mobile units' movement. That is, for example, the present invention may be applied to a case where various displays, for example, regarding travel routes are provided to the user and the user performs part of the driving operation of a mobile unit by referring to those displays.

### <First Embodiment>

### 1. Overview of Configuration of Autonomous Mobile Unit Control System

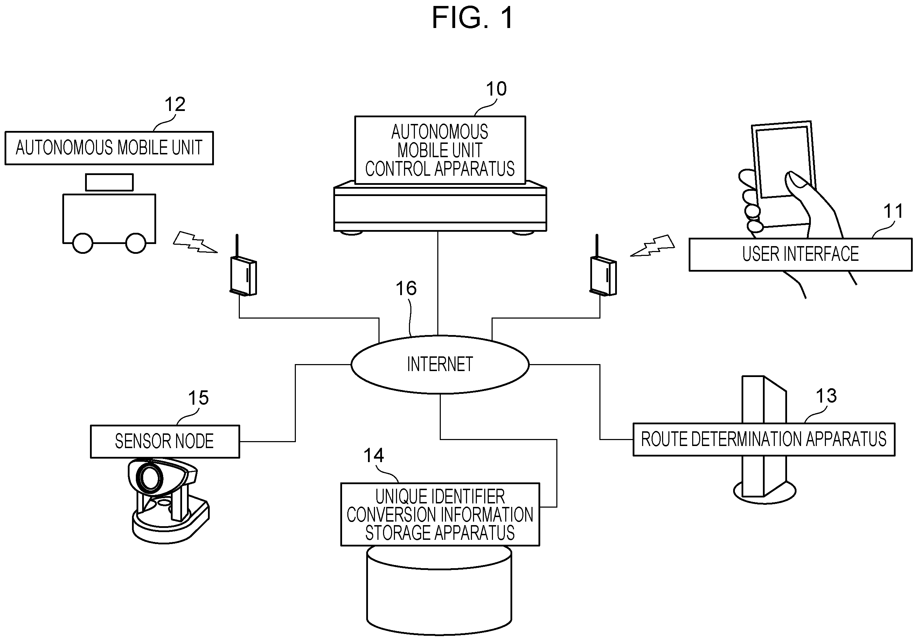

First, the configuration of an autonomous mobile unit control system according to a first embodiment of the present invention will be briefly described. Fig. 1 is a diagram illustrating the entire configuration of the autonomous mobile unit control system according to the first embodiment of the present invention.

As illustrated in Fig. 1, the autonomous mobile unit control system includes a system control apparatus 10, a user interface 11, an autonomous mobile unit 12, a route determination apparatus 13, a unique identifier conversion information storage apparatus 14, and a sensor node 15. The user interface 11 means a user terminal device. The apparatuses are connected to each other via the Internet 16 by their respective network connection units.

Note that the Internet 16 is used in the present embodiment; however, the present invention is not limited to this in particular, and other network systems, such as a local area network (LAN), for example, may be used.

Moreover, some of the system control apparatus 10, the user interface 11, the route determination means 13, and the unique identifier conversion information storage apparatus 14 may be formed as a single apparatus.

The system control apparatus 10, the user interface 11, the autonomous mobile unit 12, the route determination apparatus 13, the unique identifier conversion information storage apparatus 14, and the sensor node 15 are each constituted by an information processing apparatus (a computer) including a central processing unit (CPU), a read-only memory (ROM), a random access memory (RAM), a hard disk drive (HDD), and other devices. Details of the functions and internal configuration of each apparatus will be described later.

### 2. Services Provided by Autonomous Mobile Unit Control System

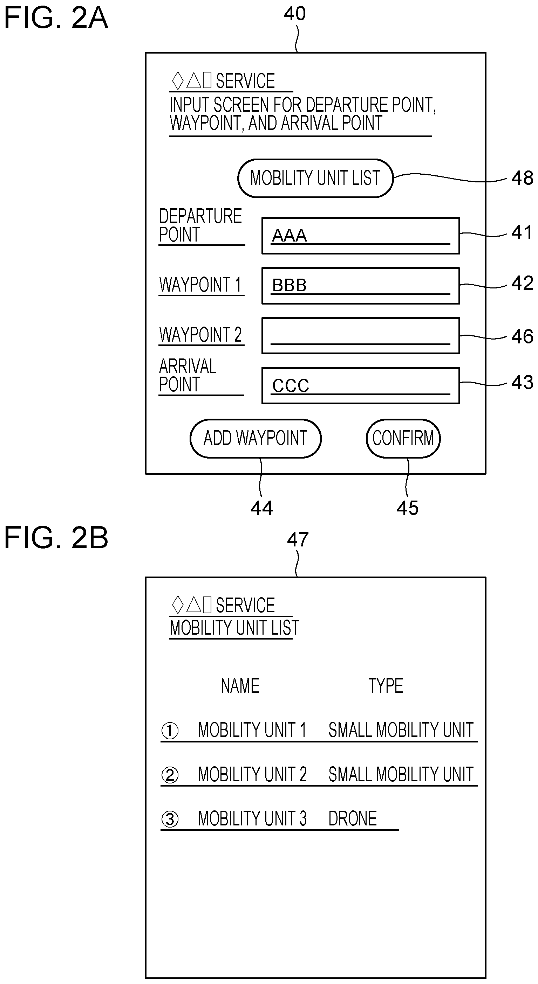

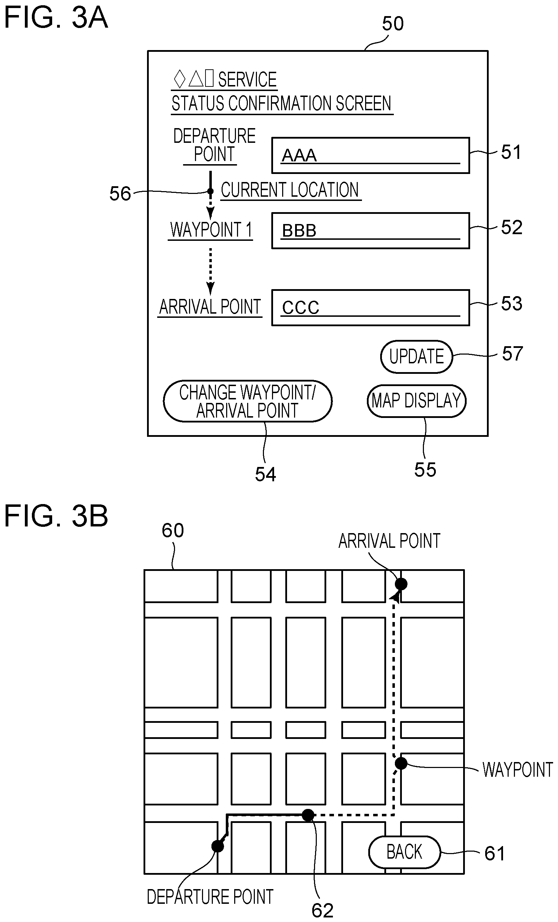

Next, the services provided by the autonomous mobile unit control system will be described. In the description, screen images (Fig. 2A, Fig. 2B) displayed on the user interface 11 when the user enters location information will be described first. Subsequently, screen images (Fig. 3A, Fig. 3B) displayed on the user interface 11 when the user is viewing the current location of the autonomous mobile unit 12 will be described. These descriptions can illustrate the way in which services are provided to users in the autonomous mobile control system.

For the sake of clarity, the description in the present embodiment will use a map display in a two-dimensional plane, but the user can also enter "height" information in the present embodiment because the user can specify a three-dimensional location, including "height".

Fig. 2A is an image diagram illustrating an input screen for the user to enter location information, and Fig. 2B is an image diagram illustrating a selection screen for selecting an autonomous mobile unit to be used. When the user accesses the Internet 16 through the display screen of the user interface 11 and selects a service of autonomous mobile unit control system, the web page of the system control apparatus 10 is displayed. On the web page, an input screen 40 for the departure point, waypoint, and arrival point is first displayed. The input screen 40 is used to set a departure point, a waypoint, and an arrival point when the autonomous mobile unit 12 is to be moved. The input screen 40 has a list display button 48 for displaying a list for selecting an autonomous mobile unit to be used. When the user presses the button, a list display screen 47 illustrated in Fig. 2B is displayed. The user first selects an autonomous mobile unit used on the list display screen 47. Once selected, the screen automatically transitions to the input screen 40. Thereafter, the user enters a location to be set as a departure point in an input field 41 of "DEPARTURE POINT". The user enters a location to be set as a waypoint in an input field 42 for "WAYPOINT 1". Note that more waypoints can be added. An additional input field 46 for "WAYPOINT 2" will be displayed by pressing an add waypoint button 44, and the user can enter an additional waypoint. The user enters a location to be set as an arrival point in an input field 43 for "ARRIVAL POINT". The user then requests the autonomous mobile unit 12 to move by pressing a confirm button 45. In the example in Fig. 2A, "AAA" is set as the departure point, "BBB" as the waypoint 1, and "CCC" as the arrival point). The text to be entered in the input field is assumed to be text that can specify any location, such as an address, for example, but it is also possible to enter location information indicating a specific location, such as latitude/longitude information or a store name.

In Figs. 2A and 2B, the departure point and arrival point of one autonomous mobile unit 12 are entered and set. However, as a matter of course, it is possible to enter and set the departure point and arrival point for one or more autonomous mobile units through the same screen or different tabs, for example. It is also possible to enter and set common departure and arrival points for one or more autonomous mobile units (for example, the autonomous mobile units depart and arrive side by side).

Fig. 3A illustrates a confirmation screen 50 displayed when a request to move the autonomous mobile unit 12 is made and thereafter the current location of the autonomous mobile unit 12 is displayed on the web page on the display screen of the user interface 11. The user can recognize the current location of the autonomous mobile unit 12 by its on-screen position indicated by a current location 56. The user can also update the screen display information to display the latest status by pressing an update button 57. The user can also change the departure point, waypoint, and arrival point by pressing a waypoint/arrival point change button 54. The departure point, waypoint, and arrival point can be changed by entering a location desired to be reassigned in each of an input field 51 for "DEPARTURE POINT", an input field 52 for "WAYPOINT 1", and an input field 53 for "ARRIVAL POINT".

Fig. 3B illustrates a map display screen 60 to which the confirmation screen 50 switches when a map display button 55 in Fig. 3A is pressed. The current location of the autonomous mobile unit 12 on the map display can be confirmed by the position of a current location 62 on this screen. The user can also return the display screen to the confirmation screen 50 by pressing a back button 61.

As described above, the user can cause the autonomous mobile unit 12 to move from a predetermined location to a predetermined location by operating the user interface 11. Possible applications of this service include, for example, taxi dispatch services and drone delivery services.

### 3. Detailed Description of Configuration and Functions of Each Apparatus (10-15)

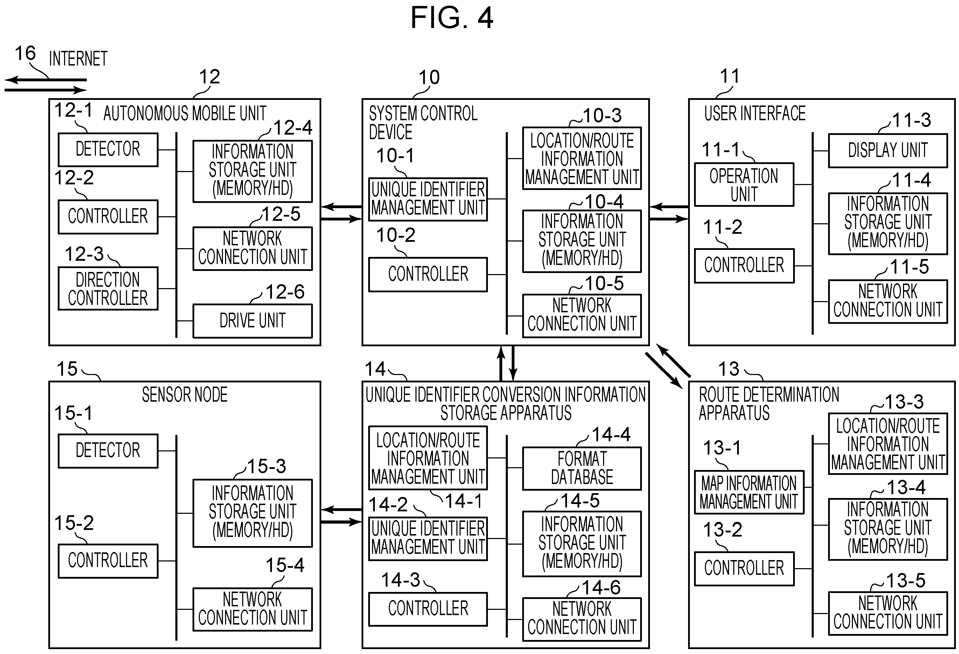

Next, the configuration and functions of each apparatus (10 to 15) in Fig. 1 will be described in detail using Fig. 4. Fig. 4 is a block diagram illustrating the internal structure of each apparatus in Fig. 1.

### 3.1 User Interface 11

In Fig. 4, the user interface 11 includes an operation unit 11-1, a controller 11-2, a display unit 11-3, an information storage unit (memory/HD) 11-4, and a network connection unit 11-5. The operation unit 11-1 includes a touch panel and key buttons and is used to input data. The display unit 11-3 is a liquid crystal screen, for example, and is used to display data. The display screen of the user interface 11 illustrated in Figs. 2A, 2B, 3A, and 3B is displayed on the display unit 11-3. The user can select services, enter information, and confirm information via the menu displayed on the display unit 11-3. That is, the operation unit 11-1 and the display unit 11-3 provide the user with a user interface to perform actual operations. In this description, the operation unit 11-1 and the display unit 11-3 are described separately; however, if a touch panel is used, the operation unit 11-1 and the display unit 11-3 may be treated as a single operable display unit. The controller 11-2 manages various services and modes such as information input and information confirmation and controls communication processing through the user interface 11. The controller 11-2 also controls processing performed by the controller of each of the operation unit 11-1, the display unit 11-3, the information storage unit (memory/HD) 11-4, and the network connection unit 11-5, for example. The information storage unit (memory/HD) 11-4 is a database for storing necessary information. The network connection unit 11-5 controls communications performed via the Internet, LAN, or wireless LAN.

As described above, the user interface 11 is a device, such as a smartphone, and is configured to display information needed by the user on the display unit 11-3 and to accept operations performed by the user from the operation unit 11-1.

With the above-described configuration, the user interface 11 displays the input screen 40 for the departure point, waypoint, and arrival point on the browser screen of the system control apparatus 10 to accept location information, such as the departure point, waypoint, and arrival point, entered by the user. The current location of the autonomous mobile unit 12 is displayed to the user by displaying the confirmation screen 50 and the map display screen 60 on the browser screen.

### 3.2 Route Determination Apparatus 13

In Fig. 4, the route determination apparatus 13 includes a map information management unit 13-1, a controller 13-2, a location/route information management unit 13-3, an information storage unit (memory/HD) 13-4, and a network connection unit 13-5. The map information management unit 13-1 has map information regarding the Earth, searches for travel route information indicating the route on the map on the basis of the specified predetermined location information, and transmits the travel route information, which is the search result, to the location/route information management unit 13-3. The map information is managed not only simply in terms of topography and information such as latitude, longitude, and altitude, but also in terms of roadway, sidewalk, direction of travel, traffic regulations, and other regulatory information related to the Road Traffic Law. The sidewalk controller 13-2 is responsible for controlling the travel route information search function of the route determination apparatus 13, and controls processing performed by the controller of each of the map information management unit 13-1, the location/route information management unit 13-3, the information storage unit (memory/HD) 13-4, and the network connection unit 13-5, for example. The location/route information management unit 13-3 manages location information acquired through the network connection unit 13-5 and also transmits the location information to the map information management unit 13-2 and manages travel route information, which is the search result, acquired from the map information management unit 13-2. In accordance with a request from an external system, the controller 13-2 converts the travel route information managed by the location/route information management unit 13-3 into a predetermined data format and transmits the resulting data to the external system.

As described above, the route determination apparatus 13 is configured to search for a route based on the specified predetermined location information in accordance with the Road Traffic Law and output the route in a predetermined data format.

With the above-described configuration, the route determination apparatus 13 in the present embodiment searches for travel route information on the basis of the location information specified by the system control apparatus 10 and provides the system control unit 10 with the travel route information in a predetermined data format.

### 3.3 Unique Identifier Conversion Information Storage Apparatus 14

In Fig. 4, the unique identifier conversion information storage apparatus 14 includes a location/route information management unit 14-1, a unique identifier management unit 14-2, a controller 14-3, a format database 14-4, an information storage unit (memory/HD) 14-5, and a network connection unit 14-6. The location/route information management unit 14-1 manages predetermined location information acquired through the network connection unit 13-5 and also transmits location information to the controller 14-3 in accordance with a request from the controller 14-3. The controller 14-3 is responsible for controlling the unique identifier conversion function of the unique identifier conversion information storage apparatus 14. The controller 14-3 controls processing performed by the controller of each of the location/route information management unit 14-1, the unique identifier management unit 14-2, the format database 14-4, the information storage unit (memory/HD) 14-5, and the network connection unit 14-6, for example. The controller 14-3 converts, into a unique identifier, the location information acquired from the location/route information management unit 14-1 on the basis of the location information and information regarding the format managed by the format database 14-4, and transmits the unique identifier to the unique identifier management unit 14-2. The format will be described in detail later, but it assigns identifiers (hereinafter referred to as "unique identifiers") to spaces starting from predetermined locations and manages the spaces using the unique identifiers. This enables, on the basis of predetermined location information, acquisition of information regarding the corresponding unique identifier and information within the certain space. The unique identifier management unit 14-2 manages unique identifiers converted by the controller 14-3 and also transmits the unique identifiers through the network connection unit 14-6. The format database 14-4 manages the information regarding the format and also transmits the information regarding the format to the controller 14-3 in accordance with a request from the controller 14-3. The format database 14-4 also manages, using the format, the information in the space acquired through the network connection unit 14-6. The unique identifier conversion information storage apparatus 14 manages information regarding spaces acquired by external devices, apparatuses, and networks connected thereto by linking the information to unique identifiers. The unique identifier conversion information storage apparatus 14 also provides the external devices, apparatuses, and networks connected thereto with a unique identifier and information regarding the space linked to the unique identifier.

As described above, the unique identifier conversion information storage apparatus 14 collects, on the basis of predetermined location information, information regarding a certain unique identifier and information within the certain space, and manages and provides that information in a state where the information can be shared among external devices, apparatuses, and networks connected thereto.

With the above-described configuration, the unique identifier conversion information storage apparatus 14 in the present embodiment converts location information specified by the system control apparatus 10 into a unique identifier and provides the system control apparatus 10 with the unique identifier.

### 3.4 System Control Apparatus 10

In Fig. 4, the system control apparatus 10 includes a unique identifier management unit 10-1, a controller 10-2, a location/route information management unit 10-3, an information storage unit (memory/HD) 10-4, and a network connection unit 14-5. The location/route information management unit 10-3 has simplified map information that is consistent with topographical information and location information, such as latitude/longitude information, and also manages predetermined location information and travel route information acquired through the network connection unit 10-5. The location/route information management unit 10-3 can also segment the travel route information into sections at predetermined intervals and generate location information, such as latitude/longitude, regarding the segmented sections. The unique identifier management unit 10-1 manages information that is unique identifiers into which the location information and travel route information are converted . The controller 10-2 is responsible for controlling the communication functions of the system control apparatus 10 for the location information, travel route information, and unique identifiers. The controller 10-2 controls processing performed by the controller of each of the unique identifier management unit 10-1, the location/route information management unit 10-3, the information storage unit (memory/HD) 10-4, and the network connection unit 14-5, for example. The controller 10-2 provides the user interface 11 with a web page. The controller 10-2 transmits predetermined location information acquired from the web page to the route determination apparatus 13, acquires predetermined travel route information from the route determination apparatus 13, and transmits pieces of location information regarding the travel route information to the unique identifier conversion information storage apparatus 14. The controller 10-2 then transmits the unique identifiers, into which the travel route information is converted, acquired from the unique identifier conversion information storage apparatus 14 to the autonomous mobile unit 12.

As described above, the system control apparatus 10 is configured to acquire predetermined location information specified by the user, transmit and receive the location information and travel route information, generate location information, and transmit and receive the travel route information using unique identifiers to issue control instructions to the autonomous mobile unit.

With the above-described configuration, the system control apparatus 10 according to the present embodiment collects, on the basis of the location information input to the user interface 11, travel route information necessary for the autonomous mobile unit 12 to move autonomously. The system control apparatus 10 also provides the autonomous mobile unit 12 with travel route information using unique identifiers.

### 3.5 Autonomous Mobile Unit 12

In Fig. 4, the autonomous mobile unit 12 includes a detector 12-1, a controller 12-2, a direction controller 12-3, an information storage unit (memory/HD) 12-4, a network connection unit 12-5, and a drive unit 12-6. The detector 12-1 has an imaging means, such as an imaging device, and a distance measurement function, such as measuring a distance based on a light phase difference using multiple imaging devices, to acquire detection information, such as the surrounding terrain and obstacles such as building walls, (hereinafter referred to as "detection information"). The detector 12-1 also has a self-location estimation function that estimates its own location from the detection information. The detector 12-1 has a self-location detection function, such as the Global Positioning System (GPS), and a direction detection function, such as a geomagnetic sensor, for example. Furthermore, on the basis of the acquired detection information, self-location estimation information, and direction detection information, the controller 12-2 can generate a three-dimensional map in cyberspace. The autonomous mobile unit 12 has, for example, learning result data from machine learning in the information storage unit 12-4, and can detect objects from captured images. The detection information can be acquired from an external system via the network connection unit 12-5 and reflected on the three-dimensional map. The controller 12-2 is responsible for controlling the movement, direction change, and autonomous driving functions of the autonomous mobile unit 12, and controls processing performed by the controller of each of the detector 12-1, the direction controller 12-3, the information storage unit (memory/HD) 12-4, the network connection unit 12-5, and the drive unit 12-6, for example. The direction controller 12-3 changes the direction of movement of the autonomous mobile unit 12 by changing the direction of the drive unit 12-6. The drive unit 12-6 includes a motor or other driving device to generate propulsion for the autonomous mobile unit 12. The autonomous mobile unit 12 can reflect the self-location, detection information, and object detection information on the three-dimensional map, generate a route that maintains a certain distance from the surrounding terrain, buildings, obstacles, and objects, and perform autonomous driving. Regarding the difference from the route generation performed by the route determination means 13, the route determination means 13 mainly considers regulatory information related to the Road Traffic Law to perform route generation. In contrast, the autonomous mobile unit 12 detects its own size and the locations of the surrounding obstacles more accurately on the route determined by the route determination means 13, and performs route generation for traveling so as not to come into contact with those surrounding obstacles.

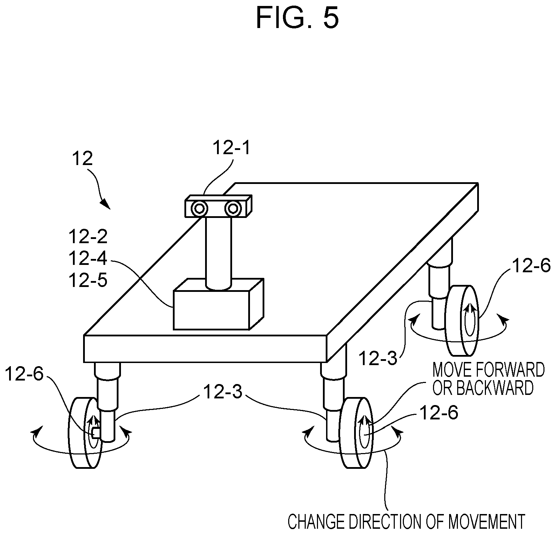

The configuration of the main body of the autonomous mobile unit 12 in the present embodiment will be described using Fig. 5. Fig. 5 is a perspective view illustrating the mechanical configuration of the autonomous mobile unit 12. Note that, in the present embodiment, the autonomous mobile unit 12 is described as a mobile body with wheels but is not limited to this. Even a flying body, such as a drone, can be used as the autonomous mobile unit 12.

In Fig. 5, the detector 12-1, the controller 12-2, the direction controller 12-3, the information storage unit (memory/HD) 12-4, the network connection unit 12-5, and the drive unit 12-6 are electrically connected to the autonomous mobile unit 12. The autonomous mobile vehicle 12 has at least two or more drive units 12-6 and at least two or more direction controllers 12-3. The direction controllers 12-3 change the direction of movement of the autonomous mobile unit 12 by changing the direction of the drive unit 12-6 by driving the shaft through rotation. The drive units 12-6 moves the autonomous mobile unit 12 forward or backward by rotating the shaft. A stereo camera, a laser infrared radar (LIDAR), or the like is applicable to the detector 12-1. Note that the configuration described using Fig. 5 is an example and is not limited to this. The autonomous mobile unit 12 may have any structure as long as the same effects can be achieved. For example, omni wheels may be used in a movement direction change structure.

As described above, the autonomous mobile unit 12 is, for example, a mobile unit equipped with simultaneous localization and mapping (SLAM) technology, and is configured to be capable of moving autonomously along a predetermined route specified on the basis of the detection information detected by the detector 12-1 or the detection information from an external system acquired via the Internet 16.

The autonomous mobile unit 12 can also perform trace movement so as to trace a route through points specified in detail or can pass through roughly defined points while generating its own travel route information for the space between those points to move.

With the above-described configuration, the autonomous mobile unit 12 in the present embodiment moves autonomously on the basis of the travel route information using the unique identifiers provided by the system control apparatus 10.

### 3.6 Sensor Node 15

In Fig. 4, the sensor node 15 is an external system, such as a video monitoring system, an example of which is a roadside unit. The sensor node 15 includes a detector 15-1, a controller 15-2, an information storage unit (memory/HD) 15-3, and a network connection unit 15-4. The detector 15-1 acquires detection information regarding its own detectable area, such as a camera, for example, and has the function of object detection and the function of distance measurement. The controller 15-2 is responsible for controlling the detection, data storage, and data transmission functions of the sensor node 15. The sensor node 15 controls processing performed by the controller of each of the detector 15-1, the information storage unit (memory/HD) 15-3, and the network connection unit 15-4, for example. The controller 15-2 also controls the function of storing, in the information storage unit (memory/HD) 15-3, the detection information acquired by the detector 15-1 and the function of transmitting the detection information to the unique identifier conversion information storage apparatus 14 through the network connection unit 15-4.

As described above, the sensor node 15 is configured to be capable of saving and communicating, in and with the information storage unit 15-3, detection information such as image information, object feature point information, and location information detected by the detector 15-1.

With the above-described configuration, the sensor node 15 in the present embodiment provides the unique identifier conversion information storage apparatus 14 with the detection information regarding its own detectable area.

### 4. Hardware Configuration of Each Controller

Next, a specific configuration of each controller in Fig. 4 will be described.

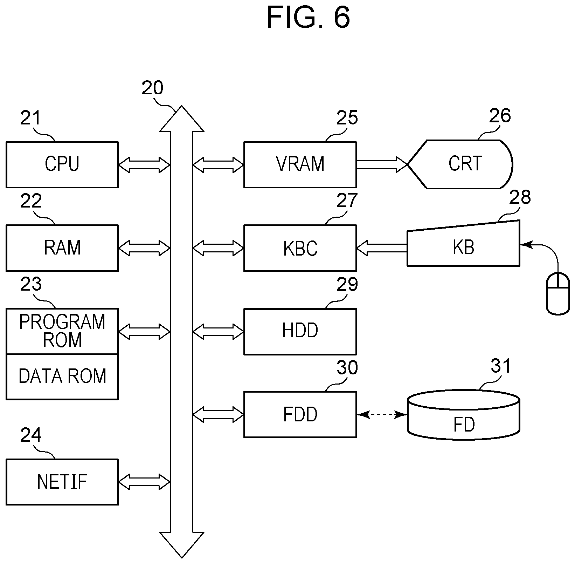

Fig. 6 is a block diagram illustrating a specific example of the configurations of the controller 10-2, the controller 11-2, the controller 12-2, the controller 13-2, the controller 14-2, and the controller 15-2.

In Fig. 6, 21 denotes a central processing unit (hereinafter referred to as "CPU") that is responsible for performing calculations and controlling the information processing apparatus. 22 denotes a random access memory (hereinafter referred to as "RAM"), which functions as the main memory of the CPU 21 and as an area for execution programs, an execution area for the programs, and data areas. 23 denotes a read-only memory (hereinafter referred to as "ROM") that stores the processing procedures of operations of the CPU 21. The ROM 23 includes a program ROM and a data ROM. The program ROM records the basic software (operating system (OS)), which is the system program that controls the equipment of the information processing apparatus. The data ROM records, for example, information necessary to operate the system. Note that instead of the ROM 23, a hard disk drive (HDD) 29 to be described below may be used. 24 denotes a network interface (NETIF), which controls data transfer between information processing apparatuses via the Internet 16 and diagnoses the connection status. 25 denotes a video RAM (VR_AM), which develops images for display on the screen of a cathode-ray tube (CRT) 26 and controls display of the images. 26 denotes a display device such as a display (hereinafter referred to as "CRT"). 27 denotes a controller (hereafter referred to as "KBC") for controlling input signals from an external input device 28. 28 denotes an external input device (hereafter referred to as "KB") used to accept operations performed by the user. For example, a pointing device such as a keyboard or a mouse is used. 29 denotes a hard disk drive (hereinafter referred to as "HDD"), which is used to save application programs and various data. Application programs in the present embodiment are, for example, software programs that perform various processing functions in the present embodiment. 30 denotes an external input-output device (hereinafter referred to as "FDD") to or from which removable data storage devices (removable media) are input or output. Examples of the FDD 30 include floppy (registered trademark) disk drives and CD-ROM drives. The FDD 30 is used to read out the application programs described above from removable media, for example. 31 denotes a removable medium, such as a magnetic recording medium (for example, a floppy (registered trademark) disk or an external hard disk) or an optical recording medium (for example, a CD-ROM) that is readable by the FDD 30. Removable media such as magneto-optical recording media (for example, magneto-optical disks (MOs)) or semiconductor recording media (for example, memory cards) may also be applicable. Note that it is also possible to store, in the FDD 30, and then use application programs and data stored in the HDD 29. 20 denotes a transmission bus (an address bus, a data bus, an input-output bus, and a control bus) to connect the above-described units.

### 5. Procedure of Processing in Autonomous Mobile Unit Control System

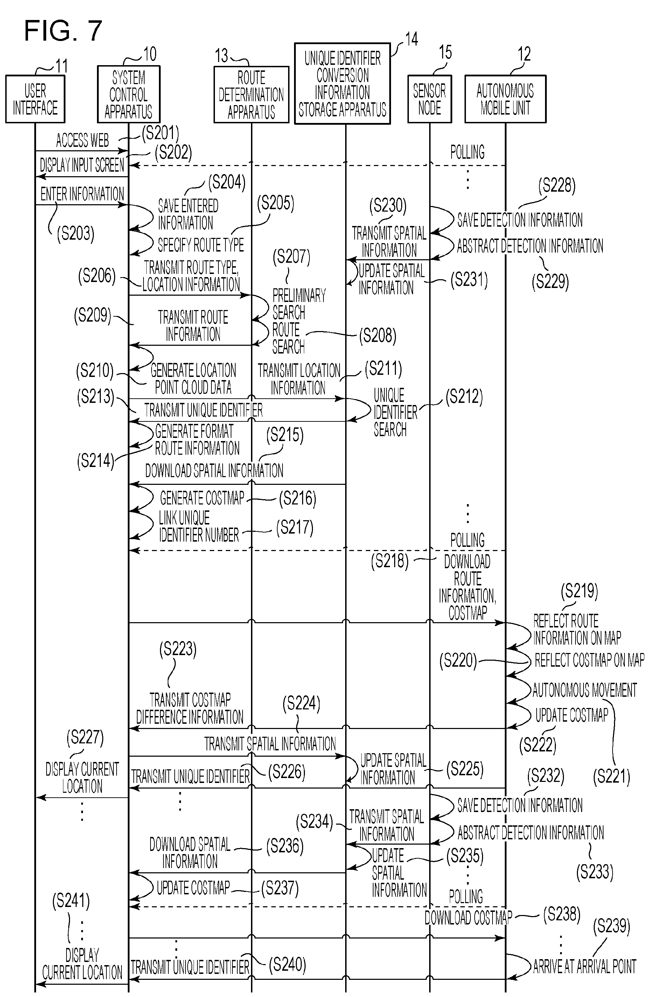

Next, the details of the control operation in the autonomous mobile unit control system to realize the services described in Figs. 2A, 2B, 3A, and 3B will be described using Fig. 7. Fig. 7 is a sequence diagram illustrating processing performed by each apparatus from when the user enters location information into the user interface 11 to when the current location information regarding the autonomous mobile unit 12 is received. The apparatuses are the system control apparatus 10, the user interface 11, the autonomous mobile unit 12, the route determination apparatus 13, the unique identifier conversion information storage apparatus 14, and the sensor node 15.

### 5-1. Information Entered by User

First, the user accesses a web page provided by the system control apparatus 10 through the user interface 11 (S201). The system control apparatus 10 displays a location input screen as described using Fig. 2A on the display screen web page (S202). As described using Fig. 2B, the user selects an autonomous mobile unit and enters location information indicating the departure point/waypoint/arrival point (hereinafter referred to as "location information") (S203). The location information can be a word or words that specify a specific location, for example, the name of a building or station or an address (hereinafter referred to as "location word"), or a method may also be used in which a specific location on a map displayed on the web page is specified as a point (hereinafter referred to as "point"). The system control apparatus 10 saves information regarding the selected autonomous mobile unit (the autonomous mobile unit 12 in this description) and the entered location information (S204). In this case, in a case where the location information is a location word, the location word is saved. In a case where the location information is a point, a search for location information such as latitude/longitude corresponding to the point is performed on the basis of the simplified map information saved in the location/route information management unit 10-3, and the location information is saved.

### 5-2. Acquisition of Travel Route Information

Next, the system control apparatus 10 specifies the type of route that can be traveled (hereinafter referred to as "route type") from the mobility format of the autonomous mobile unit 12 specified by the user (S205) and transmits the type of route to the route determination apparatus 13 together with the location information (S206). The mobility format is a legally identified type of mobile unit, which means automobile, bicycle, drone, for example. The type of route is, for example, a public road or highway for automobiles, and a predetermined sidewalk, road shoulder along a public road, or bicycle lane for bicycles. The route determination apparatus 13 inputs the received location information as the departure point/waypoint/arrival point into the map information that the route determination apparatus 13 has. In a case where the location information is a location word, the map information is searched using the location word (S207), and the corresponding latitude/longitude and other location information are used. In a case where the location information is latitude/longitude information, the latitude/longitude information is input into the map information and used as is. Subsequently, the route determination device 13 searches for a route from the departure point to the arrival point via the waypoint (S208). In this case, a search for the route is performed in accordance with the route type. As a result of the search, the route determination apparatus 13 outputs the route from the departure point to the arrival point via the waypoint (hereafter referred to as "travel route information") in the GPX format and transmits the route to the system control apparatus 10 (S209). A file in the GPX format mainly includes three types: waypoints (nonsequential pieces of point information), routes (sequential pieces of point information with time information added thereto), and tracks (collections of multiple points' information: paths). The attribute values of each piece of point information include location information such as latitude/longitude, and elevation, geoid height, and GPS reception status and accuracy are described as sub-elements. The minimum element required for a GPX file is location information such as latitude/longitude of a single point, and the description of other information is optional. The output as travel route information is a route, which is a group of pieces of point information including sequential pieces of location information, such as latitude/longitude.

### 5-3. Format Configuration

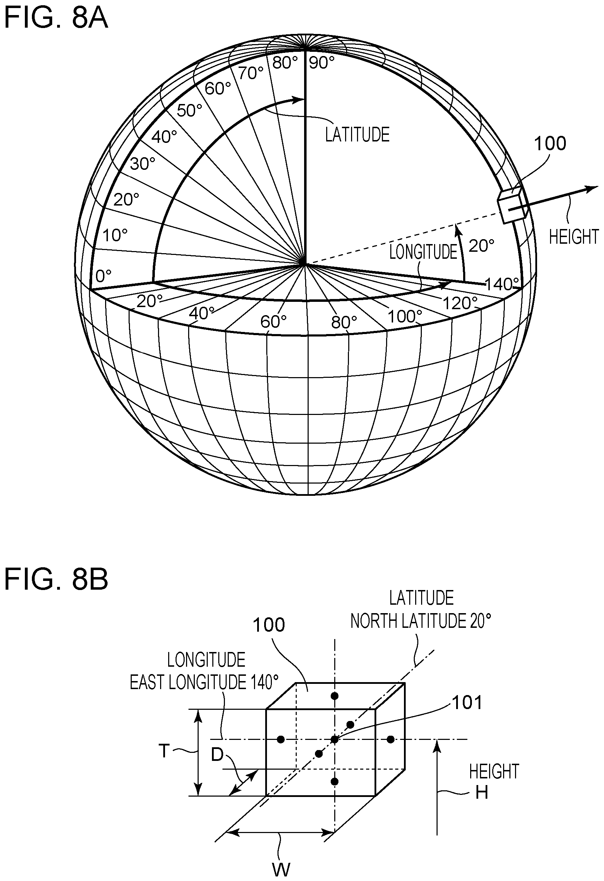

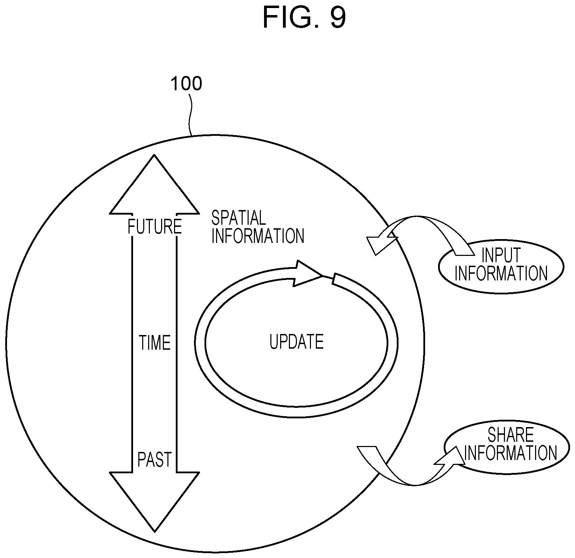

In the following, the configuration of the format managed by the format database 14-4 of the unique identifier conversion information storage apparatus 14 will be described in detail with reference to Figs. 8A, 8B, and 9. Fig. 8A is a diagram illustrating latitude/longitude information regarding the Earth. Fig. 8B is a perspective view illustrating a predetermined space 100 in Fig. 8A. In Fig. 8B, the center of the predetermined space 100 is a center 101. Fig. 9 is a diagram schematically illustrating spatial information within the space 100.

In Figs. 8A and 8B, using the format, the Earth's space is segmented into segmented spaces determined by ranges whose reference points are determined by latitude/longitude/height, and each space is made manageable by adding a unique identifier thereto. For example, in this case, the space 100 is displayed as a predetermined space. The space 100 is a segmented space with the center 101 defined as 20 degrees north latitude, 140 degrees east longitude, and a height H. In the space 100, a width in the latitudinal direction is defined as D, a width in the longitudinal direction as W, and a width in the height direction as T. The space 100 is one of the spaces obtained by segmenting the Earth's space into the spaces determined by ranges whose reference points are latitude/longitude/height. In Fig. 8A, only the space 100 is displayed for the sake of clarity, but suppose that, in the formatting regulations, the spaces defined similarly to as in the space 100 are arranged side by side in the latitude/longitude/height directions as mentioned above. In addition, suppose that the arranged segmented spaces each have a horizontal location defined by latitude/longitude and that the arranged segmented spaces also overlap each other in the height direction, and the locations of the segmented spaces in the height direction are defined by height. Although the reference point for latitude/longitude/height is set to the center of each segmented space in Fig. 8B, the reference point is not limited to this. For example, the reference point may be set to a corner of the space or the center of the bottom of the space.

In addition, it is sufficient that the space be substantially rectangular parallelepiped-shaped. When considering the case of laying rectangular parallelepipeds on a spherical surface such as the Earth, the top surface of each rectangular parallelepiped should be slightly wider than the bottom surface thereof, so that they can be arranged without gaps.

When the space 100 is taken as an example in Fig. 9, the format database 14-4 stores state-related information and time-related information (spatial information) regarding objects present in the range of the space 100 in chronological order, from the past to the future. The spatial information is updated by information input by, for example, external systems (for example, the sensor node 15) that are communicatively connected to the unique identifier conversion information storage apparatus 14, and the spatial information is shared with other external systems that are communicatively connected to the unique identifier conversion information storage apparatus 14.

Moreover, information regarding business operators or individuals having external systems, information regarding methods for accessing detection information acquired by the external systems, and detection-information specification information such as metadata or communication format of the detection information may also be managed as spatial information in association with unique identifiers.

The format has been described above, and this makes it possible to manage space and time by associating, with unique identifiers, the state-related information and time-related information (hereafter referred to as "spatial information") regarding objects present in the space determined by the range whose reference point is latitude/longitude/height.

Note that, in the present example, latitude/longitude/height will be used as the coordinate system that defines the location of the space, but the coordinate system is not limited to this. Any coordinate system that can specify a spatial location may be used. For example, an XYZ coordinate system with freely determined coordinate axes or the Military Grid Reference System (MGRS) as horizontal coordinates may be used. Other system may also be used, such as the pixel coordinate system, which uses the pixel positions of the image as coordinates, or the tile coordinate system, which segments a predetermined region into units called tiles and represents them in the X/Y direction side by side.

### 5-4. Generation of Location Point Cloud Data from Travel Route Information

Returning to Fig. 7, the rest of the processing performed by the autonomous mobile unit control system will be described again. The system control apparatus 10 checks the intervals between pieces of point information in the received travel route information and creates location point cloud data (hereinafter referred to as "location point cloud data") that are obtained by making the intervals between the pieces of point information and the intervals between the reference points of the segmented spaces defined by the format be consistent with each other (S210). In this case, in a case where the intervals between the pieces of point information are smaller than the intervals between the reference points of the segmented spaces, the system control apparatus 10 thins out the pieces of point information in the travel route information to match the intervals between the reference points of the segmented spaces and treats the resulting point information as the location point cloud data. In a case where the intervals between the pieces of point information are larger than the intervals between the reference points of the segmented spaces, the system control apparatus 10 interpolates the point information to the extent that it does not deviate from the travel route information and treats the resulting point information as the location point cloud data.

Note that, in the description according to the present embodiment, when format route information to be described below is created from the location point cloud data, the position point group data is thinned out/interpolated so that the spaces identified by unique identifiers included in the format route information are linked together without gaps. However, processing is not limited to this. It is sufficient that at least the intervals between the pieces of point information constituting the location point cloud data be greater than or equal to the intervals between the reference points of the segmented spaces. In this case, in a case where the intervals between the location point cloud data are small, it is possible to specify a more detailed travel route. On the other hand, the data volume of the entire travel route increases. In a case where the intervals between the location point group data are large, it is not possible to specify a detailed travel route; however, the data volume of the entire travel route can be suppressed. That is, appropriate adjustment can be achieved in accordance with conditions, such as travel route instruction granularity for the autonomous mobile unit 12 and the amount of data that can be handled. It is also possible to partially change the intervals between the location point cloud data to set a more appropriate travel route.

### 5-5. Conversion of Location Point Cloud Data into Format Route Information

Next, the system control apparatus 10 transmits the latitude/longitude information of each piece of point information in the location point cloud data to the unique identifier conversion information storage apparatus 14 sequentially along the route (S211). The unique identifier conversion information storage apparatus 14 searches for the unique identifiers corresponding to the received latitude/longitude information (S212) and transmits the unique identifiers to the system control apparatus 10 (S213). The system control apparatus 10 arranges the received unique identifiers in the same order as in the location point cloud data, which is the original data, and stores the arranged unique identifiers as travel route information using the unique identifiers (hereafter referred to as "format route information") (S214).

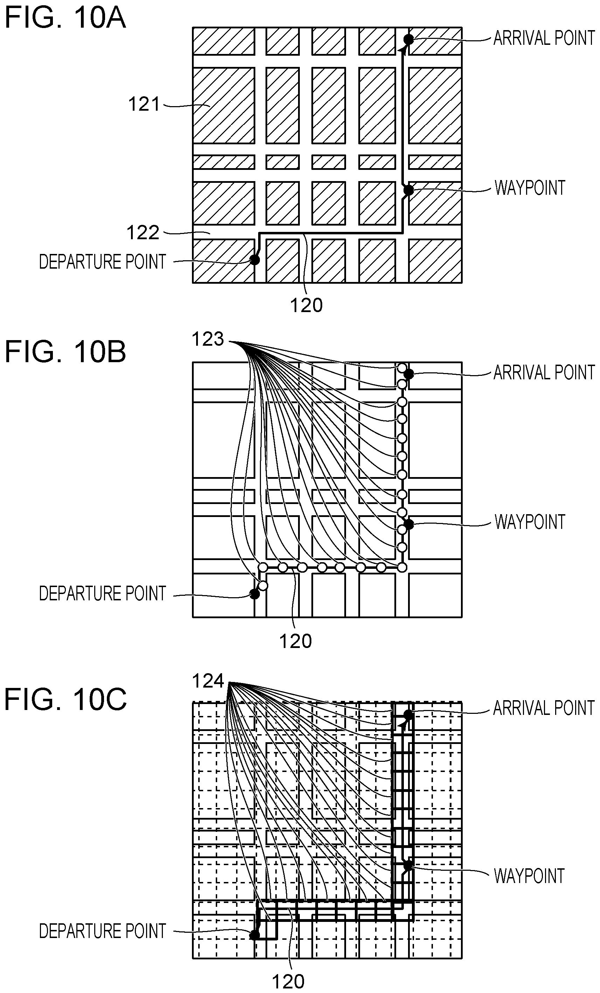

In the following, the process of generating location point cloud data from the travel route information and converting the location point cloud data into travel route information using unique identifiers will be described in detail with reference to Figs. 10A, 10B, and 10C. Figs. 10A, 10B, and 10C illustrate an image in which travel route information using travel route information is displayed as map information, an image in which travel route information using location point cloud data is displayed as map information, and an image in which travel route information using unique identifiers is displayed as map information, respectively.

In Fig. 10A, 120 denotes travel route information, 121 denotes non-navigable regions where the autonomous mobile unit 12 cannot pass through, and 122 denotes a navigable region where the autonomous mobile unit 12 can move. On the basis of the location information regarding the departure point, waypoint, and arrival point specified by the user, the travel route information 120 generated by the route determination apparatus 13 is generated as a route that passes through the departure point, waypoint, and arrival point and extends on the navigable region 122 on the map information.

In Fig. 10B, 123 denotes location information on the travel route information. The system control unit 10 that has acquired the travel route information 120 generates the location information 123, pieces of which are arranged at predetermined intervals on the travel route information 120. The pieces of location information 123 can each be expressed in latitude/longitude/height, and these pieces of location information 123 are collectively expressed as location point cloud data. The system control unit 10 then transmits the latitude/longitude/height of each of these pieces of location information 123 one by one to the unique identifier conversion information storage apparatus 14 to convert the pieces of location information 123 into unique identifiers.

In Fig. 10C, 124 denotes pieces of location spatial information, which are obtained by converting the pieces of location information 123 into unique identifiers one by one and expressing the spatial ranges defined by the unique identifiers in square frames. Converting the pieces of location information into unique identifiers yields the pieces of location spatial information 124. As a result, the route expressed by the travel route information 120 is expressed by the continuous pieces of location spatial information 124, and data is created in which each piece of location spatial information 124 is linked to intra-spatial information. These continuous pieces of location spatial information 124 are collectively expressed as format route information.

### 5-6. Conversion from Unique Identifiers to Costmap

Returning to Fig. 7, the rest of the processing performed by the autonomous mobile unit control system will be described again. Next, the system control apparatus 10 downloads, from the unique identifier conversion information storage apparatus 14, the spatial information linked to each unique identifier in the vicinity of the format route information (S215). What regions "the vicinity of the format route information" corresponds to will be described later. The system control apparatus 10 then converts the spatial information regarding the vicinity of the format route information into a format that can be reflected on a three-dimensional map of the cyberspace of the autonomous mobile unit 12 to create information indicating the locations of multiple objects in a predetermined space (hereinafter referred to as "costmap") (S216). A costmap may be initially created for the entire route regarding the format route information or may be created for each section among sections obtained by segmenting the format route information at fixed intervals and updated sequentially.

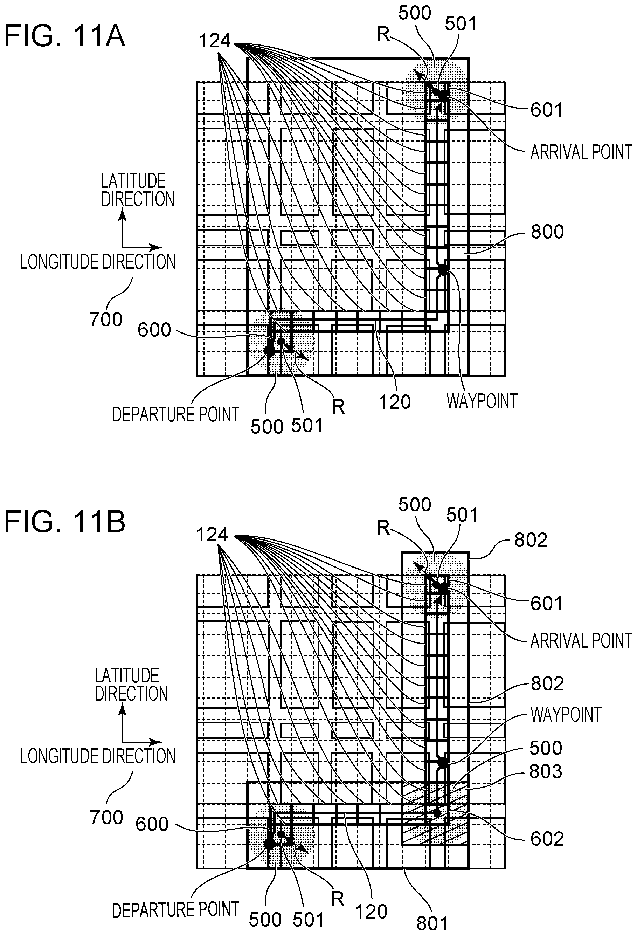

In the following, what regions "the vicinity of the format route information" corresponds to will be described in detail with reference to Figs. 11A and 11B. Note that Figs. 11A and 11B are diagrams using Fig. 10C, and description regarding the same signs will be omitted since the same signs indicate the same meanings.

Regarding Figs. 11A and 11B, Fig. 11A illustrates an image for a case where a costmap is created for the entire route in the format route information. Fig. 11B illustrates an image for a case where a costmap is created for each section among sections obtained by segmenting the format route information at fixed intervals.

First, a format route information vicinity region for a case where a costmap is created for the entire route in the format route information will be described using Fig. 11A.

In Fig. 11A, a circular region 500 is a circular region of a radius R centered at a center 501. A segmented space 600 is the segmented space that is at the most negative end in both the latitude and longitude directions in the format route information constituted by the continuous pieces of location spatial information 124. A segmented space 601 is the segmented space that is at the most positive end in both the latitude and longitude directions in the format route information. A coordinate display 700 is a coordinate display with arrows indicating the positive and negative latitude and longitude directions. A rectangular region 800 is a format route information vicinity region in Fig. 11A.

First, the system control apparatus 10 identifies the segmented region 600 and the segmented region 601 in the entire route in the format route information. One way to identify these regions would be, for example, to search for regions where the values at the center positions are the largest or smallest among the pieces of location spatial information 124.

Next, circular regions 500 are set whose centers 501 coincide with the respective centers of the identified segmented spaces 600 and 601.

Then, a rectangular region 800 is derived that encompasses all of the circular regions 500 and is circumscribed by the circular regions 500.

Next, format route information vicinity regions for a case where a costmap is created for each section among sections obtained by segmenting the format route information at fixed intervals will be described using Fig. 11B. Description common to Fig. 11A will be omitted.

In Fig. 11B, when the route from the segmented space 600 to a segmented space 602 is treated as a first route among the sections obtained by segmenting the format route information at fixed intervals, the segmented space 602 is the segmented space that is at the most positive end in both the latitude and longitude directions. Moreover, when the route from the segmented space 602 to the segmented space 601 is treated as a second route among the sections obtained by segmenting the format route information at fixed intervals, the segmented space 602 is also the segmented space that is at the most negative end in both the latitude and longitude directions. A rectangular region 801 is a format route information vicinity region along the first route described above. A rectangular region 802 is a format route information vicinity region along the second route. A rectangular region 803, which is indicated by diagonal lines, is the region where the rectangular regions 801 and 802 overlap.

First, the system control apparatus 10 specifies the segmented region 600 and the segmented region 602 on the first route of the format route information. This identification method is substantially the same as that in Fig. 11A.

Next, circular regions 500 are set whose centers 501 coincide with the respective centers of the identified segmented spaces 600 and 602.

Then, a rectangular region 801 is derived that encompasses all of the circular regions 500 and is circumscribed by the circular regions 500.

Similarly, the system control apparatus 10 derives the rectangular region 802 on the second route of the format route information. In this case, spatial information regarding the rectangular region 803 has already been acquired on the basis of the rectangular region 801, and thus there may be some overlap in the spatial information. Thus, when the system control apparatus 10 downloads, using the rectangular region 802, spatial information linked to each unique identifier of the format route information vicinity region from the unique identifier conversion information storage apparatus 14 (S215), it may be acceptable not to download the rectangular region 803.

As described above, the system control apparatus 10 determines the format route information vicinity region(s) for which the spatial information is to be downloaded (S215) from the unique identifier conversion information storage apparatus 14.

### 5-7. Loading of Format Route Information and Costmap into Autonomous Mobile Unit

Next, the system control apparatus 10 links the format route information and costmap to a unique identification number assigned to the autonomous mobile unit 12 and stores linked data (S217). At predetermined intervals, the autonomous mobile unit 12 monitors (hereafter referred to as "polls") its own unique identification number via the network and downloads the linked data (S218). The autonomous mobile unit 12 reflects, as travel route information, the latitude/longitude information regarding each unique identifier of the format route information on the three-dimensional map of the cyberspace created by the autonomous mobile unit 12 (S219).

Note that 5-6 and 5-7 describe a case where the system control apparatus 10 creates a costmap from the format route information and the autonomous mobile unit 12 downloads the costmap from the system control apparatus 10. The autonomous mobile unit 12 can be configured to download only the format route information from the system control apparatus 10 and convert the unique identifiers into a costmap. In this case, the method described in "5-6. Conversion from Unique Identifiers to Costmap" is used.

### 5-8. Update Costmap

Next, the autonomous mobile unit 12 reflects, as obstacle information on the route, the costmap on the three-dimensional map of the cyberspace (S220). In a case where a costmap is created for each section among the sections segmented at fixed intervals, after moving in the region for which the costmap was created, the autonomous mobile unit 12 updates the costmap by downloading the costmap for the next region. The autonomous mobile unit 12 moves along the travel route information while avoiding the objects input by the costmap (S221). At this time, the autonomous mobile unit 12 moves while performing object detection. If there is a difference from the costmap, the autonomous mobile unit 12 updates the costmap using the object detection information (S222) and moves. Moreover, the autonomous mobile unit 12 transmits the difference information from the costmap together with the corresponding unique identifier to the system control apparatus 10 (S223). The system control apparatus 10 that has acquired the unique identifier and the difference information from the costmap transmits the spatial information to the unique identifier conversion information storage apparatus 14 (S224). The unique identifier conversion information storage apparatus 14 updates the spatial information regarding the corresponding unique identifier (S225). As the content of the spatial information to be updated in this case, the difference information from the costmap is not reflected as it is. The difference information from the costmap is abstracted by the system control apparatus 10 and transmitted to the unique identifier conversion information holder 14. The details of the abstraction will be described in "5-11. Updating of Information within Segmented Space by Sensor Node" below.

### 5-9. Notification of Location Information

Every time passing through a segmented space linked to each unique identifier, the autonomous mobile unit 12 that moves on the basis of the format route information transmits, to the system control apparatus 10, the unique identifier corresponding to the space where the autonomous mobile unit 12 is currently located (S226). Alternatively, at the time of polling, the autonomous mobile unit 12 may link the unique identifier to the unique identification number corresponding to the autonomous mobile unit 12. The system control apparatus 10 grasps, on the basis of the unique identifier information received from the autonomous mobile unit 12, the current location of the autonomous mobile unit 12 on the format route information. By repeating step 226, the system control apparatus 10 can grasp where the autonomous mobile unit 12 is currently located in the format route information. The system control apparatus 10 acquires the travel status in this manner. The system control apparatus 10 may stop storing information related to the unique identifier of the space through which the autonomous mobile unit 12 has passed. As a result, the stored data volume of the format route information can be reduced.

### 5-10. Notification of State to User

The system control apparatus 10 creates, on the basis of the grasped current location information regarding the autonomous mobile unit 12, the confirmation screen 50 and the map display screen 60 described using Figs. 2A, 2B, 3A, and 3B and displays a web page on the display screen (S227). Every time the autonomous mobile unit 12 transmits the unique identifier indicating the current location to the system control apparatus 10, the system control apparatus 10 updates the confirmation screen 50 and the map display screen 60.

### 5-11. Updating of Information within Segmented Space by Sensor Node

The sensor node 15 saves detection information regarding the detection range (S228), abstracts the detection information (S229), and transmits the abstracted detection information as spatial information to the unique identifier conversion information storage apparatus 14 (S230). Abstraction refers to, for example, information as to whether an object exists or whether there has been a change in the object's state of existence and does not refer to detailed information regarding the object. Detailed information regarding the object is stored in a memory in the sensor node. The unique identifier conversion information storage apparatus 14 links the spatial information to the unique identifier of the location corresponding to the spatial information and stores the linked information (S231). In this case, the spatial information is stored for one unique identifier in the format database.

In a case where an external system different from the sensor node 15 utilizes the spatial information, on the basis of the spatial information in the unique identifier conversion information storage apparatus 14, the external system acquires the detection information in the sensor node 15 via the unique identifier conversion information storage apparatus 14 and utilizes the acquired detection information. At this time, the unique identifier conversion information storage apparatus 14 also has the function of connecting the communication standard of the external system to that of the sensor node 15.

By storing spatial information as described above not only in the sensor node 15 but also across multiple devices, the unique identifier conversion information storage apparatus 14 can function as a format for connecting data among the multiple devices with a relatively light data volume. In "5-6. Conversion from Unique Identifiers to Costmap", in a case where the system control apparatus 10 needs detailed object information when creating a costmap, the system control apparatus 10 downloads the detailed information from an external system that stores detailed detection information regarding spatial information and use the detailed information.

### 5-12. Reflection of Spatial Information Updates on Mobile Unit

Suppose that, in this case, the sensor node 15 has updated the spatial information on the route in the format route information regarding the autonomous mobile unit 12. In this case, the sensor node 15 acquires detection information (S232), generates spatial information (S233), and transmits the spatial information to the unique identifier conversion information storage apparatus 14 (S234). The unique identifier conversion information storage apparatus 14 stores the spatial information in the format database 14-4 (S235). The system control apparatus 10 checks for, at predetermined time intervals, changes in spatial information in the format route information that the system control apparatus 10 manages, and if there is a change, the system control apparatus 10 downloads the spatial information (S236) to update the costmap. The system control apparatus 10 then updates the costmap linked to the unique identification number assigned to the autonomous mobile unit 12 (S237). The autonomous mobile unit 12 recognizes costmap updates by polling, and reflects the updates on the three-dimensional map of the cyberspace that the autonomous mobile unit 12 created (S238).

As described above, by utilizing the spatial information shared by multiple devices, the autonomous mobile unit 12 can recognize in advance changes, on the route, that the autonomous mobile unit 12 cannot recognize, and can respond to such changes.

Note that the method has been described above in which the system control apparatus 10 checks for changes in the spatial information at predetermined time intervals and downloads the spatial information when there is a change. The system control apparatus 10 can register, in the unique identifier conversion information storage apparatus 14, unique identifiers for which an advance notification of changes in spatial information is desired. In a case where there is a change in the spatial information regarding the space identified by the corresponding unique identifier, a method may be used in which the unique identifier conversion information storage apparatus 14 transmits the change to the system control apparatus 10.

After carrying out the series of systems described above, when the system control apparatus 10 recognizes that the autonomous mobile unit 12 has arrived at the arrival point (S239) from the transmitted unique identifier (S240), the system control apparatus 10 displays an arrival indication on the user interface 11 (S241), and the service ends.

Based on the description above, a digital architecture format and an autonomous mobile unit control system using the digital architecture format are provided.

The present invention is also realized by performing the following processing. That is, the software (program) that realizes the functions of the embodiments described above is supplied to a system or apparatus via a network or various storage media, and the computer (or CPU, MPU, for example) of the system or apparatus reads out and executes the program. The program may also be recorded on a computer-readable recording medium and then provided.

The present invention is not limited to the embodiments described above, and various changes and modifications are possible without departing from the spirit and scope of the invention. Accordingly, the following claims are appended to disclose the scope of the invention.

The present invention is not limited to the embodiments described above, and various changes and modifications are possible without departing from the spirit and scope of the invention. Accordingly, the following claims are appended to disclose the scope of the invention.

This application claims the benefit of Japanese Patent Application No. 2022-014166, filed February 1, 2022, and Patent Application No. 2023-003404, filed January 12, 2023, both of which are hereby incorporated by reference herein in their entirety.

## Claims

1. A control system comprising:
a setting means for setting a departure point and an arrival point for at least one autonomous mobile unit;
a route generation means for generating route information regarding the autonomous mobile unit from the departure point and the arrival point;
a unique identifier conversion means for converting location information defined by a coordinate system capable of specifying a location in a space into unique identifier information in a format that identifies, using a unique identifier, state-related information and time-related information regarding an object present in the space defined by the coordinate system; and
a communication means for communicating with the autonomous mobile unit,
wherein the unique identifier conversion means converts location information regarding each point included in the route information into the unique identifier to express the route information using the unique identifiers.

2. The control system according to Claim 1, wherein
the communication means transmits the route information expressed by the unique identifiers to the autonomous mobile unit, and
the autonomous mobile unit moves autonomously using the route information expressed by the unique identifiers.

3. The control system according to Claim 1, wherein the unique identifier conversion means has the unique identifier information regarding a predetermined region and state-related information and time-related information regarding an object present in a space identified by the unique identifier, and
the control system further comprising: an acquisition means for acquiring, from the unique identifier conversion means, state-related information and time-related information regarding an object present in a space identified by a unique identifier, in a vicinity of the route information, among the unique identifiers.

4. The control system according to Claim 1, wherein
a storage means that stores the route information expressed by the unique identifiers stops storing information associated with the unique identifier information of a point through which the autonomous mobile unit has passed.

5. The control system according to Claim 1, wherein
the autonomous mobile unit includes a self-position estimation means, an object detection means, and a route generation means.

6. The control system according to Claim 1, wherein an interval between the location information regarding each point included in the route information is greater than or equal to an interval between location information identified by the unique identifier and location information identified by an adjacent unique identifier.

7. The control system according to Claim 1, wherein
the unique identifier conversion means has the unique identifier information regarding a predetermined region and state-related information and time-related information regarding an object present in a space identified by the unique identifier,
the unique identifier conversion means is communicatively connected to an external system, and
the state-related information and time-related information regarding the object present in the space identified by the unique identifier is shared with the external system.

8. The control system according to Claim 3, wherein
the communication means transmits, to the autonomous mobile unit, the route information expressed by the unique identifiers and state-related information and time-related information regarding an object present in a space in the vicinity of the route information, and
the autonomous mobile unit moves autonomously using the route information expressed by the unique identifiers and the state-related information and time-related information regarding the object present in the space in the vicinity of the route information.

9. The control system according to Claim 3, wherein
in a case where state-related information and time-related information regarding an object present in a space in the vicinity of the route information are
created for each section among sections obtained by segmenting the route information at fixed intervals, the state-related information and time-related information regarding the object present in the space in the vicinity of the route information for each section are transmitted to the autonomous mobile unit in accordance with a current location of the autonomous mobile unit.

10. The control system according to Claim 6, wherein
the interval between the location information regarding each point included in the route information in a partial route included in the route information is
different from that in another partial route.

11. The control system according to Claim 7, wherein
the external system includes a detection means for detecting state-related information and time-related information regarding an object present in a space, and
the state-related information and time-related information regarding the object present in the space identified by the unique identifier include
information abstracted from detection information detected by the detection means.

12. The control system according to Claim 7, wherein
the state-related information and time-related information regarding the object present in the space identified by the unique identifier are updated by the external system.

13. The control system according to Clam 6, wherein
information regarding a business operator having the external system, information regarding a method for accessing detection information acquired by the external system, and detection-information specification information regarding at least one of metadata and a communication format of the detection information
are managed in association with the unique identifier.

14. The control system according to Claim 1, wherein
in a case where there is a change in at least one of state-related information and time-related information regarding an object present in a space identified by the unique identifier,
the communication means is used to notify the autonomous mobile unit.

15. A control method comprising: a setting step for setting a departure point and an arrival point for at least one autonomous mobile unit;
a route generation step for generating route information regarding the autonomous mobile unit from the departure point and the arrival point; and
a unique identifier conversion step for converting location information defined by a coordinate system capable of specifying a location in a space into unique identifier information in a format that identifies, using a unique identifier, state-related information and time-related information regarding an object present in a space defined by the coordinate system,
wherein, in the unique identifier conversion step, location information regarding each point included in the route information is converted into the unique identifier to express the route information using the unique identifiers.
